(19) Europäisches Patentamt
European Patent Office
Office européen des brevets

(11) Publication number: 0 416 503 A2

# (12) EUROPEAN PATENT APPLICATION

(21) Application number: 90116874.0

(51) Int. Cl.5: C08G 63/19, C08G 63/79

(22) Date of filing: 03.09.90

(30) Priority: 04.09.89 JP 228951/89

(43) Date of publication of application: 13.03.91 Bulletin 91/11

(84) Designated Contracting States: BE DE FR GB IT

(71) Applicant: KANEGAFUCHI KAGAKU KOGYO KABUSHIKI KAISHA
2-4 Nakanoshima 3-chome
Kita-ku Osaka-shi Osaka-fu(JP)

(72) Inventor: Matsumoto, Shigemi
2-12, Osakashi-cho 2-chome
Akashi-shi, Hyogo(JP)
Inventor: Yoshida, Tatsushi
9-9, Shinryodai 7-chome, Tarumi-ku
Kobe-shi, Hyogo(JP)
Inventor: Tomita, Haruo
1-110, Tomogaoka 4-chome, Suma-ku
Kobe-shi, Hyogo(JP)
Inventor: Asado, Masahiro
1-1-45-102, Yokoo 8-chome, Suma-ku
Kobe-shi, Hyogo(JP)

(74) Representative: Vossius & Partner
Siebertstrasse 4 P.O. Box 86 07 67
W-8000 München 86(DE)

## (54) Polyarylates and method for preparing the same.

(57) A polyarylate having an acid chloride value of from 150 to 1,000 ($10^{-6}$ eq./g) and a weight average molecular weight of from 3,000 to 100,000 compared to a polystyrene standard.



Xerox Copy Centre

## POLYARYLATES AND METHOD FOR PREPARING THE SAME

The present invention concerns polyarylates and, more particularly, polyarylates suitable as reactive polymers for use in forming alloys with other polymers, or as precursors for forming block copolymers.

Heretofore, polyarylates synthesized by reacting an aromatic dicarboxylic acid or a derivative thereof with a bisphenol or a derivative thereof, have been well known in the art. The polyarylates obtained according to the prior known process have a carboxyl or hydroxyl group as a functional group at a terminal end of the polymer chain. To control the molecular weight and the amount of the carboxyl or hydroxyl groups of the polymer, phenol and p-(t-butyl) phenol are used as a molecular weight controlling agents.

No known experiments have been conducted for producing reactive polyarylates, which are capable of being highly reactive with an amino, hydroxyl, acid anhydride or epoxy group, by several steps such as introducing an acid chloride group to the terminal end of the polymer chain, controlling the amount of the acid chloride group, or controlling the molecular weight of the polyarylate.

The present inventors have determined that polyarylates having a carboxylic acid chloride group which cannot be produced by an equimolar reaction can be easily produced by charging the aromatic dicarboxylic acid chloride in a 5 to 20% excess over the theoretically equimolar amount with respect to the total amount of bisphenol compound and phenol compound which are used, and polymerizing the compounds followed by removing the solvent from the solution to isolate the products.

The objects of the present invention are to provide novel and useful polyarylates and an economical method for the preparation thereof.

These objects have been achieved by the surprising finding that polyarylates having an acid chloride group according to the present invention are prepared by polymerization using an excess of aromatic dicarboxylic acid chloride over the theoretical equivalent amount based on functional group equivalence with respect to the total amount of bisphenol and, if used, phenol compound and substantially removing the solvent from the solution to isolate the product.

The acid chloride values of the polyarylates according to the present invention are varied depending on the utility of the end product, and are preferably from 150 to 1000 ($10^{-6}$ equivalent/g). If the acid chloride value is less than 150, the reactivity of the compound as a reactive polymer is lowered, whereas if the acid chloride value is over 1000, the molecular weight of the product polymer becomes too low to exhibit specific properties as a polymer. Thus, polyarylates having acid chloride values which are out of the claimed range are not preferred. The acid chloride values according to the present invention are more preferably from 150 to 500 and, most preferably, from 150 to 300.

The polyarylates of the present invention preferably have a weight average molecular weight of from 3,000 to 100,000 and, most preferably, of from 5,000 to 80,000, compared to a polystyrene standard. The polyarylates having a molecular weight less than 3,000 do not exhibit polymeric properties whereas those having a molecular weight higher than 100,000 are not desirable due to having a substantially lower number of function groups introduced at the terminal ends resulting in a lowering of the acid chloride values.

The acid chloride value of the present invention is calculated by the following equation:

$$\text{Acid chloride value at } 10^{-6} \text{ equivalent/g} = [(T_S - T_B) \times \frac{0.1 \times F}{1000} \times 10^6]/W$$

wherein $T_S$ represents the amount in ml of 0.1 N tributylamine required to precipitate the sample;
$T_B$ represents the amount in ml of 0.1 N tributylamine required to precipitate the control sample;
F represents the titer of 0.1 N tributylamine obtained by titration thereof with a standard hydrochloric acid solution; and
W represents the weight of the sample in g.

Examples of the aromatic dicarboxylic acid chloride include terephthalic acid chloride, isophthalic acid chloride, and phthalic acid chloride, which may be used alone or in combinations of two or more.

The bisphenols may be those represented by the following formula:

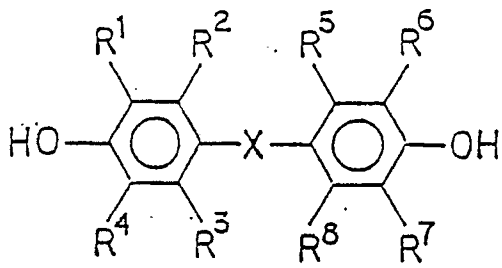

wherein -X- represents -O-, -SO-, $-SO_2-$, -CO-, $C_1$-$C_{10}$ alkylene, or $C_2$-$C_{20}$ alkylidene; $R^1$ - $R^8$ each represent independently hydrogen, halogen or a $C_1$-$C_{10}$ hydrocarbon group.

Examples of the bisphenol include 4,4′-dihydroxydiphenyl ether, bis(4-hydroxyphenyl)-sulfide, bis(4-hydroxyphenyl)-sulfone, bis(4-hydroxyphenyl)-ketone, bis(4-hydroxy-phenyl)-methane, bis(4-hydroxy-3,5-dimethyl)-methane, 1,1-bis(4-hydroxyphenyl)-phenylethane, bis(4-hydroxyphenyl)-diphenylmethane, 2,2-bis-(4-hydroxy-3,5-dichlorophenyl)-propane, bis(4-hydroxyphenyl)-cyclohexylmethane, 1,2-bis(4- hydroxyphenyl)-cyclohexane, 2,2-bis(4-hydroxyphenyl)-propane. If required, at least one of these bisphenol compounds above can be used in combination with another divalent compound, such as 4,4′-dihydroxy biphenyl, dihydroxynaphthalene, and hydroquinone. Further, on demand, a mono-functional phenol such as phenol, o-cresol, m-cresol, p-cumylphenol, p-methoxyphenol, and p-(t-butyl)phenol, can be used as a molecular weight adjusting agent.

In the process for preparing the polyarylate of the present invention, the aromatic dicarboxylic acid chloride is used in excess of the theoretical equivalent, in terms of functional groups with respect to the total amount of bisphenol and monofunctional phenol. In other words, the aromatic dicarboxylic chloride is used in such a manner that the equivalent amount of the acid chloride group is in excess over the equivalent amount of total hydroxyl groups which are contained in the bisphenol compound and mono-functional compound. The dicarboxylic acid chloride is preferably used in an excess of 5 to 20%. If the excess is less than 5%, the amount of acid chloride incorporated into the terminal end of the polymer is undesirably lowered, whereas if the excess is over 20%, the desired product cannot be obtained because the molecular weight of the polyarylate obtained is lowered, polymerization behavior becomes unstable, and unreacted product is increased. The excess amount is preferably from 5 to 10%.

The method of polymerization includes solution polymerization, and interfacial polymerization. Interfacial polymerization is the most preferred. The interfacial polymerization is carried out, for example, by contacting an aqueous solution containing a bisphenol and at least one compound selected from the group consisting of hydrides, carbonates, hydrogencarbonates and phosphates of an alkali and alkali-earth metal; an organic solvent which is immiscible with said aqueous solution; and an organic solvent containing the aromatic dicarboxylic acid chloride.

Examples of the organic solvent used include methylene chloride, 1,2-dichloroethane, chloroform, trichloroethane, tetrachloroethane, chlorobenzene, and orthodichlorobenzene.

A catalyst can also be used in the polymerization. Examples of the suitable catalysts include a tertiary amine such as triethylamine, and tripropylamine; a quartenary ammonium compound such as tetraethylammonium bromide, benzyl trimethylammonium chloride, benzyl triethylammonium chloride, and benzyl tributylammonium chloride; and a phosphonium compound such as n-butyltriphenylphosphonium bromide. The catalyst is used in an amount of 0 to 5 mol parts with respect to 100 mol parts of the total amount of bisphenol and mono-functional phenol compound.

In desired, an antioxidation agent, reducing agent, and UV absorbent may be incorporated.

Polymerization time depends on various factors such as the type of bisphenol compound and polymerization temperature, and is generally several minutes to several hours.

Regarding polymerization temperature, it is preferably not higher than 60°C and most preferably from 0°C to 30°C.

To protect the monomers against deterioration during polymerization, it is preferred to maintain the polymerization system in a nitrogen atmosphere.

The process for adding monomers may be carried out by either adding an organic solution containing the aromatic dicarboxylic acid chloride to an aqueous solution containing the bisphenol, or vice versa. Simultaneous addition of the organic solution and aqueous solution is preferred since an excess amount of acid chloride over the total amount of hydroxyl groups in the bisphenol and mono-functional phenol compounds can be maintained in the polymerization system.

In the polymerization process, the mixture should be fully stirred so that the aqueous and organic

solutions which are immiscible each other may be uniformly dispersed. If required, a surfactant may be used as a dispersant.

The polymerization takes place in an emulsion state. After completion of the polymerization, the emulsion is permitted to stand or with mechanical means to separate into an aqueous phase and an organic phase containing polymer and the aqueous phase is decanted. Then, depending on a nature of the organic phase, after treatment such as neutralization, precipitation, extraction and washing thereof, the product polymer, i.e., polyarylate, is isolated by addition thereof to a poor solvent having no active hydrogen such as benzene, hexane and acetone; evaporation of the solvent under a temperature as low as possible; or condensation under dispersion thereof with adding an aqueous dispersant solution such as polyvinyl alcohol.

Since the polyarylates of the present invention have an acid chloride group at a terminal end of the polymer chain, the polyarylate polymer shows unexpected properties which the prior known polyarylates do not possess, such as reactivity with an amino group, hydroxyl group, acid anhydride group and epoxy group, which allows formation of polymer alloys with other polymers.

The polyarylates of the present invention are suitable for use as precursors of block copolymers.

A solution polymerization of the present invention may be carried out in any of the conventional processes. For example, the process comprises reacting a bisphenol with an aromatic dicarboxylic acid chloride in an organic solvent such as methylene chloride, 1,2-dichloroethane, chloroform, trichloroethane, tetrachloroethane, chlorobenzene, and orthodichlorobenzene in the presence of an equimolar amount of an acid acceptor such as tertiary amines with respect to phenolic hydroxyl groups.

A polymerization time may be varied depending on a type of the bisphenols, and a polymerization temperature, and is sufficient from about several minutes to several hours. To isolate an acid chloride group, an amount of unreacted phenolic hydroxyl group is preferably smaller, and a reaction time is preferably longer than 60 minutes. The reaction temperature is preferably not higher than 60 $^\circ$C, with more preferably 0 $^\circ$C to 30 $^\circ$C.

After completion of the reaction, the object polymer is isolated by charging the reactant solution to a poor solvent having no active hydrogen, such as acetone, benzene, and hexane.

The present invention is hereinafter described in greater detail with reference to examples, which are not to be construed as limiting the scope thereof. Unless otherwise indicated, all parts, percents and ratios are by weight.

Example 1

681.45g (2.985 mol) of 2,2-bis(4-hydroxyphenyl)-propane, 4.51g (0.03 mol) of p-(t-butyl) phenol, 5.28g of sodium hydrosulfide, 1,536 ml of 5N sodium hydroxide solution, and 3,610 ml of water were mixed in a 6ℓ flask under a nitrogen atmosphere, and cooled to 5 $^\circ$C to prepare an aqueous bisphenol alkali solution.

Separately, 129.12g (0.636 mol) of tere-phthalic acid chloride and 516.48g (2.544 mol) of iso-phthalic acid chloride were dissolved into 5,000 ml of methylene chloride in a 6ℓ flask and the mixture was cooled to 5 $^\circ$C.

Further, separately, 2,000 ml of water and 0.94g (0.003 mol) of benzyl tributylammonium chloride, as a catalyst, were charged under a nitrogen atmosphere into a 15ℓ reactor and the mixture was cooled to 5 $^\circ$C. With vigorous agitation of the cooled solution, the two solutions previously prepared were simultaneously and continuously charged into the mixture through a pump for 15 minutes.

After completion of addition of the solutions, mixing was continued for 60 minutes and was stopped to separate the mixture into two phases, a methylene chloride phase and water phase. After decanting the water phase out, the same amount of water as decanted was added and a mixture thus formed was neutralized with a small amount of hydrochloric acid.

Subsequently, after repeating the desalting, the same amount of acetone as of the methylene chloride phase was gradually added to precipitate a polymer powder, which was subsequently filtered. The filtrate was washed with the same amounts each of acetone and water as added previously and further filtered. The polymer powder was dried at 80 $^\circ$C for 10 hours, and subsequently at 140 $^\circ$C for 10 hours.

The polymer powder thus obtained was evaluated to determine the acid chloride value with the following procedure.

About 0.1g of the polymer powder was accurately weighed and dissolved into 10 ml of chloroform. To the solution, 2 ml of methanol and a small amount of 2% Thymol Blue-methanol solution, as an indicator, were added, and the mixture was further agitated at room temperature for 60 minutes. Then free hydrochloric acid was titrated by adding 0.1N tributylamine-chloroform solution to find an end point where

the indicator changed from pink to yellow. A blank test was carried out separately.

The acid chloride value of the polymer was determined to be $10^{-6}$ eq./g by calculation using the equation mentioned hereinbefore.

A weight average molecular weight of 45,000 was obtained as 45,000 converted to polystyrene according to a gel permeation chromatographic method.

Example 2

The procedure of the Example 1 was repeated except that 340.72g (1.4925 mol) of 2,2-bis(4-hydroxyphenyl)-propane and 433.36g (1.4925 mol) of 1,1-bis(4-hydroxyphenyl)-phenylethane were used as bisphenols, and 645.6g (3.18 mol) of iso-phthalic acid chloride was used as the acid chloride.

The acid chloride value of the polymer powder obtained was 159 and the weight average molecular weight was 46,000.

Example 3

13.40g (0.066 mol) of terephthalic acid chloride and 53.60g (0.264 mol) of isophthalic acid chloride were dissolved into 5,000 ml of dichloroethane in a 1 ℓ flask and the mixture was cooled to 5 °C.

Separately, 68.49g (0.3 mol) of 2,2-bis(4-hydroxypnenyl)-propane, 60.72g (0.3 mol) of triethylamine, and 500 ml of 1,2-dichloroethane were mixed under a nitrogen atmosphere in a 2ℓ flask and the mixture was cooled to 5 °C. To the mixture under agitation, a 1,2-dichlorethane solution as an acid chloride, prepared previously, was added through titration funnel for 5 minutes.

After completion of addition of the solutions, mixing was continued for as 60 minutes and stopped. Acetone was gradually added to precipitate a polymer powder. After filtering the precipitates, the powder was washed with acetone followed by filtering of the powder.

The polymer powder thus obtained, was dried at 80 °C for 10 hours, and subsequently at 140 °C for 10 hours.

The acid chloride value of the polymer was 256 and the weight average molecular weight was 19,000.

Comparative Example 1

A procedure of the Example 1 was repeated to prepare a polymer powder except that 121.81g (0.6 mol) of terephthalic acid chloride and 487.25g (2.4 mol) of isophthalic acid chloride were used.

The acid chloride value of the polymer powder was 0 and the weight average molecular weight was 98,000.

Comparative Example 2

The procedure of Example 3 was repeated to prepare a polymer powder except that 12.18g (0.06 mol) of terephthalic acid chloride and 48.73g (0.24 mol) of isophthalic acid chloride were used.

The acid chloride value of the polymer powder was 0 and the weight average molecular weight was 35,000.

## Claims

1. A polyarylate having an acid chloride value of from 150 to 1,000 ($10^{-6}$ eq./g) and a weight average molecular weight of from 3,000 to 100,000 compared to a polystyrene standard.

2. A method for preparing a polyarylate having an acid chloride group and which comprises polymerizing a 5 to 20% excess of the theoretic equivalent of an aromatic dicarboxylic acid chloride, in terms of functional groups, with a bisphenol in the presence of a solvent and isolating the product by substantially removing the solvent from the polymerization system.

3. A method for preparing a polyarylate according to Claim 2, wherein the polymerization is carried out in an interfacial polymerization.